# EUROPEAN PATENT SPECIFICATION

(11) **EP 3 244 084 B1**
(45) Date of publication and mention of the grant of the patent: **14.04.2021**
(21) Application number: 16168768.6
(22) Date of filing: 09.05.2016
(51) Int. Cl.: F16D 55/226, F16D 65/18, F16D 125/40, F16D 121/24, F16D 66/00

(54) **BRAKING DEVICE FOR A ROTARY SHAFT OR RUNNING RAIL**
BREMSVORRICHTUNG FÜR EINE DREHWELLE ODER LAUFSCHIENE
DISPOSITIF DE FREINAGE D'UN ARBRE ROTATIF OU RAIL DE ROULEMENT

(43) Date of publication of application: 15.11.2017
(73) Proprietor: Dellner Brakes AB, 781 70 Borlänge (SE)
(72) Inventor: ANDERSSON, Mats, SE-795 90 RÄTTVIK (SE)
(74) Representative: Brann AB

(56) References cited:
- DE-A1-102010 023 701
- FR-A1- 2 885 660
- US-A- 4 809 824

## Description

### TECHNICAL FIELD OF THE INVENTION

The present invention relates to a braking device. More specifically, the invention relates to a braking device comprising a bracket in which a brake caliper is suspended floating on guide pins, first and second brake pads supported in the brake caliper and movable between braking and idle positions, an actuator applying a pressure for moving the brake pads towards each other in braking mode, and return springs effective for returning the brake pads to idle positions in non-braking mode.

The braking device of the present invention is intended for use in connection with a rotary shaft that carries a radial disc or flange in rotation between the brake pads, or in connection with a device or vehicle that moves along a rail which runs longitudinally between the brake pads, in non-braking mode.

### BACKGROUND AND PRIOR ART

The braking device of the present invention can be referred to a category of pressure-applied, spring-released disc brake calipers adapted for stopping and/or holding applications. Designed for braking forces ranging from a few thousand Newton (N) to several hundred kN they find a widespread use in, e.g., sea vessels and wind power plants for stopping the rotation of propellers or turbines.

Although the braking force is in most cases generated by hydraulic pressure, other applications may require alternative power in order to avoid the consequences of a leaking hydraulic fluid circuit.

In the past, attempts have been made to replace the hydraulic power by electrical power in disc brake designs. EP 2 500 597 A1, e.g., discloses a disc brake arrangement for a wind power plant wherein an electrical motor activates the brake via a worm gear transmission including a planetary roller screw that drives a spindle in axial translation towards the brake pad.

One problem that needs to be addressed in the application of electrical power in disc brakes for rotary shafts, such as turbine shafts or propeller shafts, is vibration in the rotor transferred to a motor via the brake pads and a gear transmission. In addition to causing wear in rotational parts and bearings of the motor, these vibrations may lead to a shift in position of gears and a resulting loss of braking force. In EP 2 500 597 A1 the problem is reduced by journaling the remote end of the spindle in a resilient bearing block

Document DE 10 2010 023 701 A1 discloses a braking device according to the preamble of claim 1.

### SUMMARY OF THE INVENTION

It is an object of the present invention to provide a braking device as initially stated wherein measures are taken to avoid undesired effects resulting from vibrations in a rotary shaft.

The object is met in a braking device wherein the actuator is realized in the form of an electromechanical screw jack that acts upon one of the brake pads via an extendable piston assembly that is elastically compressible in the extension direction.

Through this measure, vibrations in a rotary shaft will to the widest extent be absorbed by the piston assembly, the piston assembly efficiently isolating a motor and gear transmission in the electromechanical screw jack from rotor vibrations.

The solution further ensures the continuous application of constant clamping force to a disc or flange of a rotary shaft, since vibrations in the rotor are essentially not allowed to cause dislocation of gears in the transmission of the electromechanical screw jack.

The solution further provides a possibility to compensate for wear in the brake pads if extension of the piston assembly in braking mode is controlled in response to a monitoring of the braking force applied.

According to the invention, the elastically compressible piston assembly includes a cup spring pack that is disposed to operate between a jack screw and a piston.

The use of cup springs is preferred for their capacity of providing high compressive resistance in combination with small dimensions, thus requiring modest installation space and allowing a compact overall design of the piston assembly.

According to the invention, a hollow piston of circular section is inserted from one end of a cylindrical sleeve that is secured to a housing of the screw jack. A jack screw is arranged projecting into the hollow piston from the other end of the sleeve. A push rod that is secured to the jack screw clamps the cup spring pack inside the hollow piston towards an inwards facing surface of a piston head.

As will be understood by persons skilled in the art, especially when referring also to the drawings accompanying the written disclosure, the preferred design of the piston assembly is characterized by rotation symmetric elements arranged in concentric relation in a telescopic manner, this way reducing the total length dimension of the piston assembly to a minimum.

Control of the clamping or braking force may be relying on a sensor for measuring the length of compression of the piston assembly, or a sensor for measuring the load on the compressed cup spring pack, in braking mode. Suitable sensors for the purpose are, e.g., proximity sensors and/or load cells.

If control involves monitoring of the length of compression of the piston assembly, a proximity sensor is advantageously connected to the piston whereas a proximity sensor target is connected to the push rod, or vice versa.

For protection of sensors a control box may be secured to the sleeve, wherein a first sensor bracket which is connected to the piston reaches into the control box via a slot in the sleeve wall, and a second sensor bracket which is connected to the push rod reaches into the control box via slots through the piston and sleeve walls respectively.

The electromechanical screw jack preferably comprises an electric brake motor, i.e. an electric motor equipped with an electromechanical or electromagnetic brake acting on the motor shaft. The motor brake is in this case passive in the sense that it releases the motor shaft when power is applied to the brake. If on the other hand power supply is lost, the motor brake is applied and effective for holding the screw jack locked in position this way also maintaining the pressure and braking force applied by the cup spring pack.

The electromechanical screw jack comprises a gear transmission that preferably includes a primary gear stage and a secondary gear stage together transforming the rotational speed of the motor to an engagement speed for the piston assembly (linear movement) in the order of 0.5-10.0 mm/s, preferably in the order of 0.5-1.0 mm/s. Although the two-stage gear transmission is not a compulsory feature, an advantage provided by this embodiment is however, that comparatively high clamping forces, such as in the order of 100 kN and above, can be achieved using a motor of moderate size and power requirement.

The braking device of the present invention as briefly explained above can be sized and specified for installation and use with sea vessel propulsion shafts, power generation shafts, in mining and in manufacturing processes etc. Other applications include, e.g., logistic solutions in general, trolleys, cranes, elevators or rail-bound vehicles, wherein the braking device can be installed for stopping or holding purposes.

By relying on electrical power instead of hydraulic pressure the subject braking device can be applied in many fields and implementations where leaking hydraulic fluid may contaminate production or production facilities and products.

### SHORT DESCRIPTION OF THE DRAWINGS

Embodiments of the invention will now be described in greater detail with reference made to the accompanying drawings. In the drawings,
- Fig. 1: is a 3-dimensional view of the braking device,
- Fig. 2: is a side view of the braking device of Fig. 1,
- Fig. 3: is a partially sectioned detail of the braking device of Figs. 1 and 2, and
- Fig. 4: shows the detail of Fig. 3 turned 90 degrees towards the viewer about its horizontal axis.

### DETAILED DESCRIPTION OF PREFERRED EMBODIMENTS

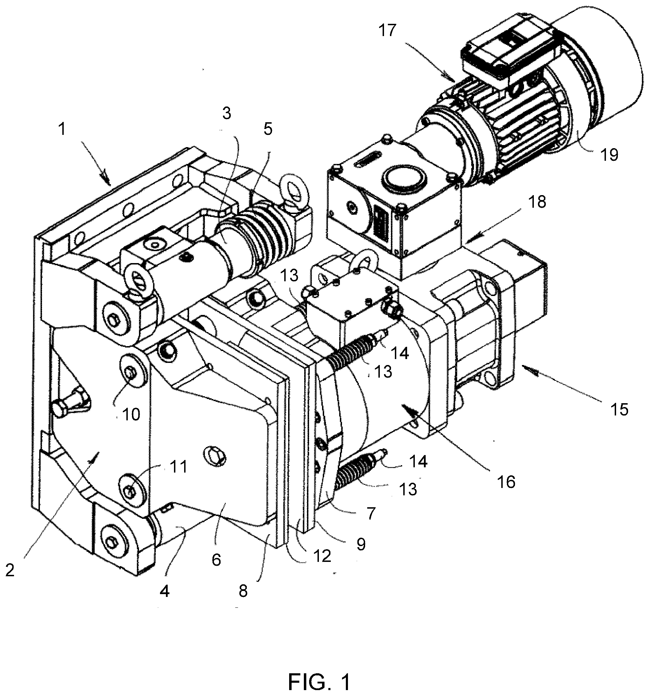

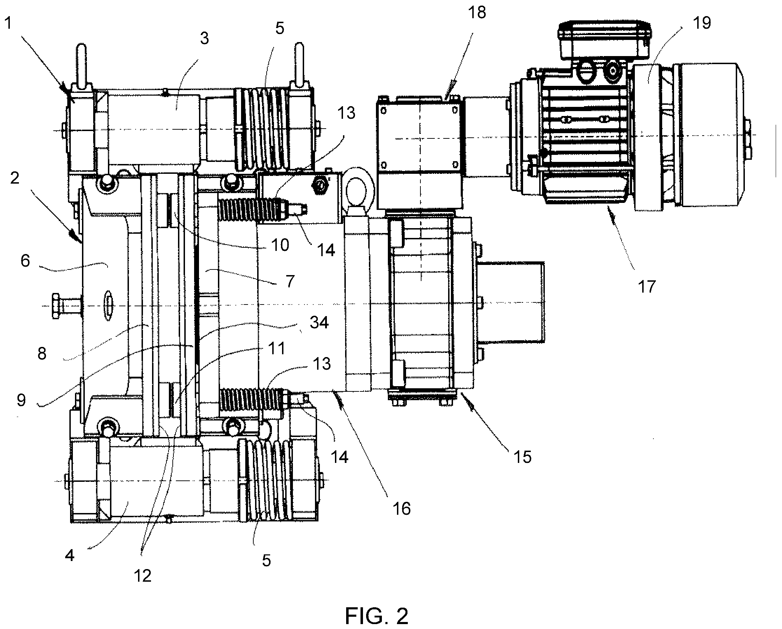

With reference to Figs. 1 and 2, a braking device comprises a bracket 1 in which a yoke-shaped brake caliper 2 is suspended floating on guide pins 3 and 4. A helical spring 5 on each guide pin is effective for biasing the caliper 2 into the position shown in Figs. 1 and 2, which is an idle position assumed in non-braking mode. A couple of tongues 6 and 7 on the caliper extend in parallel relation, the tongues forming brake pad holders for first and second brake pads 8 and 9 respectively. The first brake pad 8 is fixedly supported in the caliper, whereas the second brake pad 9 is movable in relation to the first brake pad, sliding on guide pins 10 and 11. Each brake pad 8 and 9 carries a friction element 12 facing the friction element 12 on the opposite brake pad. In idle position the brake pads are spaced apart at a distance that ensures an air gap on either side of a brake disc or rail (not shown), in use rotating or running respectively, between the brake pads.

In braking mode, the moving second brake pad 9 is forced by applied pressure into contact with the brake disc or rail, the brake pad 9 sliding on the guide pins 10 and 11 to close the air gap on this side of the brake disc/rail. As pressure rises the brake disc or rail acts as counter support to cause the caliper 2 to move on the guide pins 3 and 4 against the force of the helical springs 5, until the air gap on that side of the brake disc/rail is closed. Further raising the pressure applied to the second brake pad generates the clamping force or braking force desired to slow or to stop the rotation of the brake disc, or the relative movement of the rail as the case may be.

As pressure is removed from the brake pad 9, the springs 5 return the caliper 2 with the stationary first brake pad 8 to the idle position shown in Figs. 1 and 2. A set of compressible springs 13, which are compressed in braking mode, pulls the second brake pad 9 back towards the brake pad holder 7 as pressure is removed. The springs 13 are seated on studs 14 which are in one end secured in the brake pad 9 and guided to move axially in through holes formed in the brake pad holder 7.

In the present invention, the pressure applied in braking mode is generated by means of an electromechanical screw jack 15 and an elastically compressible piston assembly 16.

The screw jack is powered by an electrical motor 17 via a gear transmission 18. The motor is equipped with a motor brake 19 that is inactive when the motor is powered and actuated as the motor is shut down, or in the case of failure in the supply of electrical power to the motor. The screw jack 15, the motor 17 and motor brake 19, as well as the gear transmission 18, may all be off the shelf units familiar to persons skilled in the art.

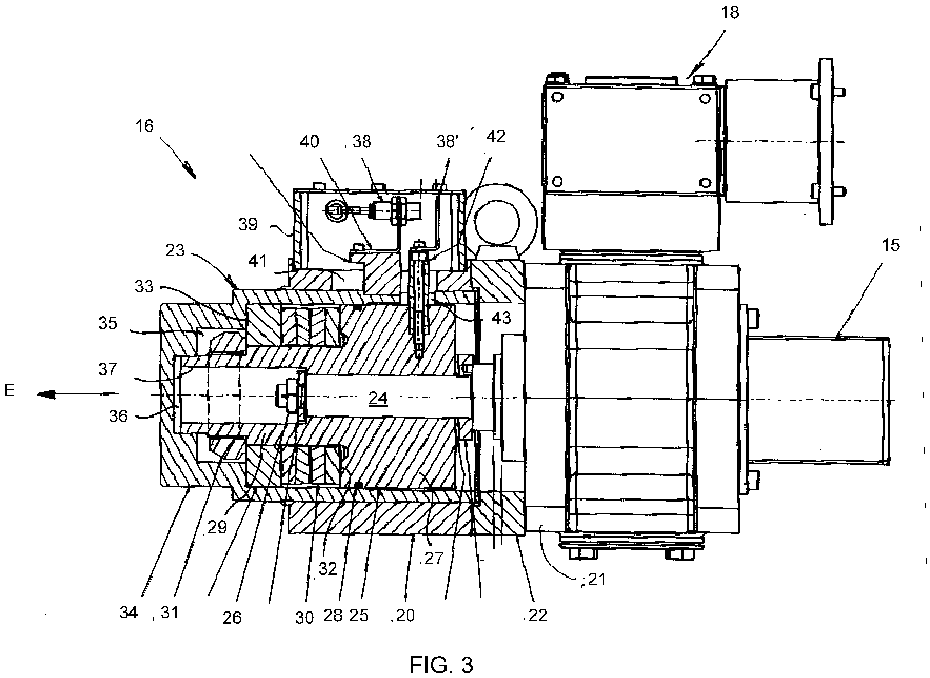

The piston assembly 16 will now be described with reference to the partially sectioned view of Fig. 3. An open ended cylindrical sleeve 20 is in one end (right hand end in Fig. 3, or rear end) coupled to the housing 21 of the screw jack 15, if appropriate via an adapter 22. The other end (forward end) of the sleeve 20 is arranged for coupling to the brake caliper 2, in alignment with a hole formed through the brake pad holder 7. A hollow piston 23 of circular section is inserted into the sleeve from the forward end of the sleeve (left hand end as depicted in Fig. 3). The piston 23 is received with a sliding fit in the sleeve 20. A jack screw 24 projects centrally into the hollow piston from the screw jack. A push rod 25 has a central through hole by which the push rod is inserted on the jack screw 24, axially secured on the jack screw by means of a nut 26. The push rod 25 is a rotation symmetric element with a large radius portion 27 that provides a sliding fit inside the hollow piston by means of an O-ring 28. The large radius portion adjoins, via a radial shoulder, a portion 29 of reduced radius in the forward end of the push rod. A pack of cup springs 30 is inserted on the portion 29 of reduce radius, secured axially on the push rod by means of a nut 31 that engages a thread formed externally on the push rod. In the drawing of Fig. 3, a spacer occupies a free space on the push rod available for insertion of additional cup springs if required.

In mounted position the cup spring pack 30 is disposed to operate between the pushrod 25 and the piston 23. To be more specific, the cup spring pack is seated between a circumferential heel 32 that projects in forward direction from the radial shoulder which connects the push rod portions 27 and 29 of different radii, and an inner, rearward facing surface 33 of a piston head 34. In the embodiment of Fig. 3, the surface 33 is a radial shoulder that defines a recess 35 in the inner surface of the piston head, the recess 35 being adapted for accommodation of the nut 31. In the bottom of the recess 35 a seat 36 is formed, the seat serving for journaling of the forward end 37 of the push rod 25.

When the piston assembly is mounted on the caliper 2, the piston head 34 projects through the brake pad holder 7 into contact with the moving brake pad 9 (see Fig. 2, wherein the forward end of the piston 34 is visible as a thick line). Upon activation of the screw jack for braking, the jack screw 24, push rod 25, cup spring pack 30 and piston 23 are together extended in the forward direction E until the air gaps on each side of the brake disc or rail are closed. Further activation of the screw jack causes additional extension of the jack screw and push rod whereas the piston remains immobile, the jack screw and push rod thus elastically compressing the cup springs until the motor power is cut upon reach of a desired clamping/braking force.

In release, the screw jack is rotated in the reverse thus pulling the jack screw 24, push rod 25 and cup spring pack 30 in retraction. The piston 23 is pushed in retraction by effect of the springs 13 that pulls the disc pad 9 into its idle position, resting against the brake pad holder 7.

Control of the clamping force may be based on monitoring of the applied pressure, such as by means of load cells and switches (this embodiment is not shown in the drawings).

Control of the clamping force is accomplished, in the illustrated embodiment, by means of a limit switch 38 that restricts the length of axial compression of the cup spring package, and thus also the length of compression of the piston assembly.

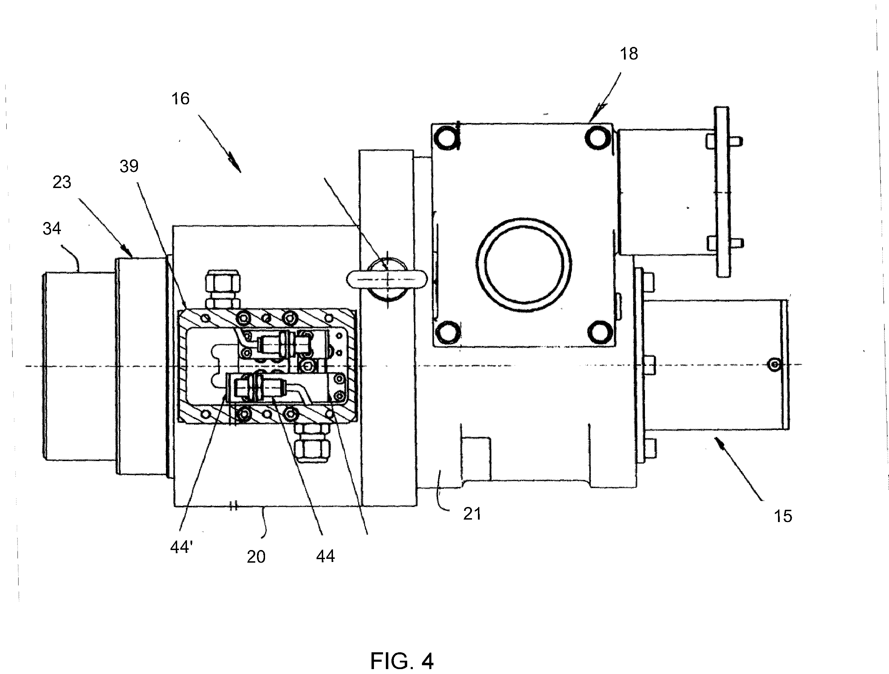

The limit switch 38 comprises a proximity sensor associated with a proximity sensor target 38'. The components of the limit switch 38, 38' are arranged protected inside a control box 39 that is mounted on the exterior of the sleeve 20. The limit switch 38 is mounted on a sensor bracket 40 that is coupled to the exterior of the piston, the sensor bracket 40 reaching into the control box via a slot 41 that is formed in the wall of the sleeve. The sensor target 38' is mounted on a sensor target bracket 42 that is coupled to the push rod 25, the bracket 42 reaching into the control box via the slot 41 in the sleeve wall and a slot 43 that is formed in the wall of the piston. In a substantially corresponding way a limit switch 44 (see Fig. 4), comprising a proximity sensor associated with a proximity sensor target 44', may be arranged to define and delimit the travel length upon retraction of the piston assembly in non-braking mode.

## Claims

1. A braking device comprising:
- a bracket (1) in which a brake caliper (2) is suspended floating on guide pins (3,4),
- first and second brake pads (8,9) supported in the brake caliper, movable between braking and idle positions,
- an actuator applying a pressure for moving the brake pads towards each other in braking mode, and return springs (5,13) in non-braking mode effective for returning the brake pads to idle positions,
wherein the actuator is an electromechanical screw jack (15) that acts upon one of the brake pads (9) via an extendable piston assembly (16) that is elastically compressible in the extension direction (E) against the force of a cup spring pack (30) that is disposed to operate between a jack screw (24) and a piston (23),
**characterized in that** the hollow piston (23) is of circular section and is inserted from one end of a cylindrical sleeve (20) that is secured to a housing (21) of the screw jack (15), a jack screw (24) projects into the hollow piston (23) from the other end of the sleeve (20), a push rod (25) is secured to the jack screw (24) clamping the cup spring pack (30) inside the hollow piston (23) towards an inwards facing surface (33) of a piston head (34).

2. The braking device of claim 1, further comprising a sensor for measuring the length of compression of the piston assembly, or the load from the compressed cup spring pack, in braking mode.

3. The braking device of claim 2, wherein a proximity sensor (38) is connected to the piston (23), and a proximity sensor target (38') is connected to the push rod (25), or vice versa.

4. The braking device of claim 3, comprising a control box (39) secured to the sleeve (20), wherein a first sensor bracket (40) connected to the piston (23) reaches into the control box (39) via a slot (41) in the wall of the sleeve, and a second sensor bracket (42) connected to the push rod (25) reaches into the control box (39) via slots (43,42) through the piston and sleeve walls respectively.

5. The braking device of any previous claim, wherein the electromechanical screw jack comprises an electric brake motor (17).

6. The braking device of any previous claim, wherein the electromechanical screw jack comprises a gear transmission (18) providing the piston assembly an engagement speed in the order of 0.5-10.0 mm/s, preferably in the order of 0.5-1.0 mm/s.

7. The braking device of any previous claim, adapted for installation with a sea vessel propulsion shaft.

8. The braking device of any of claims 1-6 adapted for installation with a power generation shaft.

9. The braking device of any of claims 1-6, adapted for installation with a mining machinery.

10. The braking device of any of claims 1-6, adapted for installation with a manufacturing process machinery.

11. The braking device of any of claims 1-6, adapted for installation with a device or vehicle moving along a rail.

## Patentansprüche

1. Bremsvorrichtung, umfassend:
- eine Halterung (1), in der ein Bremssattel (2) schwimmend auf Führungsbolzen (3,4) aufgehängt ist,
- erste und zweite Bremsbeläge (8,9), die in dem Bremssattel zwischen Brems- und Leerlaufposition beweglich gelagert sind,
- einen Aktuator, der einen Druck ausübt, um die Bremsbeläge im Bremsmodus aufeinander zu bewegen, und Rückstellfedern (5, 13), die im Nicht-Bremsmodus wirksam sind, um die Bremsbeläge in die Leerlaufposition zurückzuführen,
wobei der Aktuator eine elektromechanische Schraubenwinde (15) ist, die auf einen der Bremsbeläge (9) über eine ausziehbare Kolbenanordnung (16) einwirkt, die in Verlängerungsrichtung (E) gegen die Kraft eines Tellerfederpakets (30) elastisch komprimierbar ist, das so angeordnet ist, dass es zwischen einer Hubspindel (24) und einem Kolben (23) wirkt,
**dadurch gekennzeichnet, dass** der Hohlkolben (23) einen kreisrunden Bereich aufweist und von einem Ende einer zylindrischen Hülse (20) aus eingesetzt ist, die an einem Gehäuse (21) der Schraubenwinde (15) befestigt ist, wobei eine Hubspindel (24) vom anderen Ende der Hülse (20) in den Hohlkolben (23) hineinragt, eine Schubstange (25) an der Hubspindel (24) befestigt ist, die das Tellerfederpaket (30) im Inneren des Hohlkolbens (23) gegen eine nach innen weisende Oberfläche (33) eines Kolbenkopfes (34) einspannt.

2. Bremsvorrichtung nach Anspruch 1, weiter umfassend einen Sensor zur Messung der Kompressionslänge der Kolbenanordnung oder der Belastung durch das komprimierte Tellerfederpaket im Bremsmodus.

3. Bremsvorrichtung nach Anspruch 2, wobei ein Näherungssensor (38) mit dem Kolben (23) verbunden ist und ein Näherungssensorziel (38') mit der Schubstange (25) verbunden ist, oder umgekehrt.

4. Bremsvorrichtung nach Anspruch 3, umfassend einen Schaltkasten (39), der an der Hülse (20) befestigt ist, wobei eine erste Sensorhalterung (40), die mit dem Kolben (23) verbunden ist, über einen Schlitz (41) in der Wand der Hülse in den Schaltkasten (39) gelangt, und eine zweite Sensorhalterung (42), die mit der Schubstange (25) verbunden ist, über Schlitze (43, 42) durch die Kolben- bzw. Hülsenwand in den Schaltkasten (39) gelangt.

5. Bremsvorrichtung nach einem der vorstehenden Ansprüche, wobei die elektromechanische Schraubenwinde einen elektrischen Bremsmotor (17) umfasst.

6. Bremsvorrichtung nach einem der vorstehenden Ansprüche, wobei die elektromechanische Schraubenwinde ein Rädergetriebe (18) umfasst, das der Kolbenanordnung eine Eingriffsdrehzahl in der Größenordnung von 0,5 - 10,0 mm/s, bevorzugt in der Größenordnung von 0,5 - 1,0 mm/s, bereitstellt.

7. Bremsvorrichtung nach einem der vorstehenden Ansprüche, die für die Installation mit einer Antriebswelle eines Seeschiffs angepasst ist.

8. Bremsvorrichtung nach einem der Ansprüche 1 bis 6, die für die Installation mit einer Energieerzeugungswelle angepasst ist.

9. Bremsvorrichtung nach einem der Ansprüche 1 bis 6, die für die Installation mit einer Bergbaumaschine angepasst ist.

10. Bremsvorrichtung nach einem der Ansprüche 1 bis 6, die für die Installation mit einer Maschine für ein Herstellungsverfahren angepasst ist.

11. Bremsvorrichtung nach einem der Ansprüche 1 bis 6, die für die Installation mit einer Vorrichtung oder einem Fahrzeug, die/das sich entlang einer Schiene bewegt, angepasst ist.

## Revendications

1. Dispositif de freinage comprenant :
- un support (1) dans lequel est suspendu un étrier de frein (2) flottant sur des tiges-guides (3, 4),
- des première et seconde plaquettes de frein (8, 9) supportées dans l'étrier de frein, déplaçables entre des positions de freinage et de repos,
- un actionneur appliquant une pression pour déplacer les plaquettes de frein l'une vers l'autre dans un mode de freinage, et des ressorts de rappel (5, 13) dans un mode de non-freinage efficaces pour ramener les plaquettes de frein en positions de repos,
dans lequel l'actionneur est un vérin à vis électromécanique (15) qui agit sur l'une des plaquettes de frein (9) via un ensemble à piston extensible (16) qui est compressible élastiquement dans la direction d'extension (E) à rencontre de la force d'un bloc de rondelles ressort (30) qui est disposé pour fonctionner entre une vis de vérin (24) et un piston (23),
**caractérisé en ce que** le piston creux (23) est de section circulaire et est inséré depuis une extrémité d'un manchon cylindrique (20) qui est fixé à un boîtier (21) du vérin à vis (15), une vis de vérin (24) fait saillie dans le piston creux (23) depuis l'autre extrémité du manchon (20), une tige-poussoir (25) est fixée à la vis de vérin (24) serrant le bloc de rondelles ressort (30) à l'intérieur du piston creux (23) vers une surface tournée vers l'intérieur (33) d'une tête de piston (34).

2. Dispositif de freinage selon la revendication 1, comprenant en outre un capteur pour mesurer la longueur de compression de l'ensemble à piston, ou la charge issue du bloc de rondelles ressort compressé, dans le mode de freinage.

3. Dispositif de freinage selon la revendication 2, dans lequel un capteur de proximité (38) est relié au piston (23), et une cible de capteur de proximité (38') est reliée à la tige-poussoir (25), ou vice versa.

4. Dispositif de freinage selon la revendication 3, comprenant un boîtier de commande (39) fixé au manchon (20), dans lequel un premier support de capteur (40) relié au piston (23) pénètre dans le boîtier de commande (39) via une fente (41) dans la paroi du manchon, et un second support de capteur (42) relié à la tige-poussoir (25) pénètre dans le boîtier de commande (39) via des fentes (43, 42) à travers le piston et des parois de manchon respectivement.

5. Dispositif de freinage selon une quelconque revendication précédente, dans lequel le vérin à vis électromécanique comprend un moteur de freinage électrique (17).

6. Dispositif de freinage selon une quelconque revendication précédente, dans lequel le vérin à vis électromécanique comprend une transmission par engrenages (18) fournissant à l'ensemble à piston une vitesse d'embrayage de l'ordre de 0,5-10,0 mm/s, de préférence de l'ordre de 0,5-1,0 mm/s.

7. Dispositif de freinage selon une quelconque revendication précédente, adapté pour une installation avec un arbre de propulsion de navire.

8. Dispositif de freinage selon l'une quelconque des revendications 1-6 adapté pour une installation avec un arbre de production d'énergie.

9. Dispositif de freinage selon l'une quelconque des revendications 1-6, adapté pour une installation avec une machine minière.

10. Dispositif de freinage selon l'une quelconque des revendications 1-6, adapté pour une installation avec une machine de procédé de fabrication.

11. Dispositif de freinage selon l'une quelconque des revendications 1-6, adapté pour une installation avec un dispositif ou un véhicule se déplaçant le long d'un rail.
